# EUROPEAN PATENT SPECIFICATION

(11) **EP 2 488 388 B1**
(45) Date of publication and mention of the grant of the patent: **04.09.2019**
(21) Application number: 10808947.5
(22) Date of filing: 18.10.2010
(51) Int. Cl.: B60P 3/14

(54) **DOCKING MECHANISM, RECEIVING ASSEMBLY, VEHICLE AND METHOD**
ANDOCKMECHANISMUS, AUFNAHMEANORDNUNG, FAHRZEUG UND VERFAHREN
MÉCANISME DE GARAGE, ENSEMBLE RÉCEPTEUR, VÉHICULE ET PROCÉDÉ

(30) Priority: 16.10.2009 NL 1037406
(43) Date of publication of application: 22.08.2012
(73) Proprietor: Lafourcade, Yves, 3401 AR IJsselstein (NL); Dankerlui, Jerry, 3401 AR Ijsselstein (NL)
(72) Inventor: LAFOURCADE, Yves, NL-3401 AR IJsselstein (NL); DANKERLUI, Jerry, NL-3401 AR IJsselstein (NL)
(74) Representative: Hoeben, Ferdinand Egon
(86) International application number: PCT/NL2010/000147
(87) International publication number: WO 2011/046427

(56) References cited:
- DE-A1- 19 514 912
- DE-U1- 9 105 752
- DE-U1- 29 609 986
- FR-A1- 2 811 278
- FR-A1- 2 836 109
- FR-A1- 2 885 831
- US-A1- 2006 061 116

## Description

The present invention relates to a docking mechanism for docking a dockable transport means to a vehicle in safeguarded manner. The present invention also relates to a receiving assembly for receiving such a docking mechanism. The present invention also relates to a vehicle for docking by means of such a docking mechanism. The present invention further relates to a method for docking by means of a docking mechanism.

It is known to make use of tool carts for transporting tools from for instance a delivery van to a work location. Such tool carts are also seen as mobile tool boxes. During use of such tool carts accidents occasionally happen during loading and unloading thereof relative to the van. A well-filled tool cart can have a considerable weight, which is in any case not easy for one person to handle.

Document FR2885831 A1 discloses a storage module for materials and/or equipment to be carried in a van rear compartment having a floor fixed to the van chassis and a rear loading door, comprising a workshop unit with a lower supporting floor and perpendicular fixing walls. The supporting floor is parallel to, and slides relative to, the van floor, so that the unit can be at least partially slid out of the compartment.

In this light there is a desire to be able to make use of a tool cart which does not have such drawbacks. A further object of the present invention is to provide a transport means which has further possible applications as a tool cart.

In order to achieve such objectives the present invention provides a docking mechanism for docking a dockable transport means, comprising at least a transport undercarriage with transport means such as wheels, in safeguarded manner to a receiving location, such as a receiving location which can be arranged on a vehicle, such as a road, marine or airborne vehicle, wherein the transport undercarriage can only be transferred from a position of use to a docking position when the transport means is situated in a blocking mode relative to the receiving location, and wherein the blocking mode can be discontinued only when the transport undercarriage is situated in the position of use.

It is an advantage of such a docking mechanism that a transport means with a relatively great weight or a large load can be removed from the vehicle or placed on the vehicle in safe manner. This obviates a great hazard, i.e. the transport means crashing to the ground during performing of the docking operations when the transport means is too heavy for the person performing the docking operations, this because falling back is prevented by the blocking means. It is for instance hereby further possible in advantageous manner to first obtain an initial coupling before the transport undercarriage of the transport means can be transferred from the position of use to the docking position. It should be understood here that the position of use is a situation in which it is possible to travel with the transport means on the undercarriage, and that the docking position is for instance a collapsed position of the undercarriage, whereby the transport means as a whole takes up less space. Nor does the transport means need to be lifted, because the undercarriage can be folded away. It is for instance possible for the transport means to remain substantially at the height of the loading floor of the vehicle while the docking operations are performed.

According to a first preferred embodiment according to the present invention, the docking mechanism comprises:
- a support member for supporting the transport means during the docking,
- a blocking actuator for actuating a blocking member between a blocking mode and a release mode for the purpose of blocking the transport means against leaving the receiving location during docking, while the transport undercarriage is in a free docking position,

- a coupling assembly for switching the transport undercarriage between a position of use and the docking position, wherein
- the coupling assembly is adapted such that switching of the transport undercarriage from the position of use to the docking position is possible when the blocking member is situated in the blocking mode, and that actuation of the blocking member from the blocking mode to the release mode is possible when the transport undercarriage is situated in the position of use.

It is hereby possible to realize the advantages of the device according to the invention in advantageous manner. It is possible in effective manner with this embodiment to prevent the transport means falling out of the vehicle during the docking operations.

The following embodiments also provide respective further elaborations of the safety provision.

In a further preferred embodiment the coupling assembly comprises:
- a primary coupling member for hooking into a primary transport undercarriage hook,
- a primary transport undercarriage hook for receiving the primary coupling member, wherein the primary coupling member and the primary transport undercarriage hook can only be uncoupled when the blocking member is in the blocking mode.

The coupling assembly more preferably comprises:
- a secondary coupling member for hooking into a secondary transport undercarriage hook,
- a secondary transport undercarriage hook for receiving the secondary coupling member, wherein the secondary coupling member and the secondary transport undercarriage hook can only be uncoupled during the coupling operation of the primary coupling member.

In order to facilitate movement during performing of the docking operations, the support member comprises displacing means such as wheels or slide pads.

In order to bring about blocking of the blocking member in reliable manner during the docking operations, the blocking actuator is coupled by means of a spring member to the blocking member.

A rotatable shaft arranged transversely under the transport means is preferably provided, wherein primary coupling members are arranged on the outer ends thereof. The primary coupling members can hereby be given a dual form in simple manner, whereby the stability and performance of the docking operations are improved.

The blocking member and the primary coupling member are preferably fixed and arranged round a rotatable shaft.

The secondary coupling member is more preferably arranged for rotation under bias relative to the primary coupling member.

The primary coupling member is more preferably provided with a blocking element for co-action with the secondary coupling member.

A frame of the transport undercarriage is more preferably arranged pivotally relative to the secondary coupling member in a manner such that the secondary coupling member is urged into the secondary transport undercarriage hook when the frame of the transport undercarriage is pivoted from the docking position to the position of use.

The docking mechanism more preferably comprises biasing means for orienting the blocking member under bias in the direction of the free position, or for holding the rotatable shaft under bias in a manner such that the blocking member is held in the free position and the primary coupling members in the coupled position. This achieves in advantageous manner that the blocking mode is actuated only when the blocking actuator is actuated.

A further aspect of the present invention relates to a receiving assembly which can be arranged at a receiving location of a vehicle, such as a road, marine or airborne vehicle suitable for co-action with a docking mechanism according to one or more of the foregoing claims, wherein the receiving assembly comprises an engaging member for co-action with the blocking member.

Such a receiving assembly can function together with the docking mechanism, and they are together therefore based on one inventive concept. With this co-action advantages are gained as already described in the foregoing.

A preferred embodiment of this second aspect relates to a receiving assembly comprising a receiving member variable in height, such as an inclining member, such as a receiving plate, for receiving a support member thereon. It hereby becomes possible to perform the docking operations even when there is a variation in the relative height between the vehicle and the transport means. In the case of delivery vans for instance the height of the loading floor is variable due to more or less weight being present. Such height differences can be compensated by means of this embodiment.

An actuating member arranged on the receiving plate is preferably provided for actuating the blocking actuator. The blocking can hereby be actuated in reliable manner.

The receiving assembly more preferably comprises a number of fixation members for fixing the transport means relative to the vehicle. The transport means is hereby held fixedly during movement of the vehicle, whereby it cannot move relative to the vehicle. Hazardous situations caused by displacement of the mass of the transport means can hereby be prevented.

The receiving member is preferably pivotable and fixable. It can hereby protrude from the vehicle in advantageous manner so that the docking mechanism can reach it in advantageous manner while the transport undercarriage is still in the position of use. In the collapsed position the receiving member further functions as a fixation element for the transport means. Because the receiving member has this dual function, no further fixation members are necessary for the transport means in the vehicle.

A further aspect according to the present invention relates to a docking mechanism according to the present invention, comprising a receiving assembly according to the present invention which can be arranged at the receiving location.

A further aspect according to the present invention relates to a transport means comprising a docking mechanism according to the present invention.

A further aspect according to the present invention relates to a method for docking a transport means relative to a vehicle, comprising steps for:
- arranging the vehicle and the transport means relative to each other so that they are situated in the relative arrangement suitable for docking,
- moving the vehicle and the transport means relative to each other so that the docking mechanism is introduced into the receiving location.

These latter aspects provide advantages similar to those described in the foregoing with reference to the first aspects.

Further advantages, features and details of the present invention will be described in greater detail hereinbelow on the basis of one or more preferred embodiments, with reference to the accompanying figures.
Fig. 1 is a cut-away perspective view of a first preferred embodiment according to the present invention.

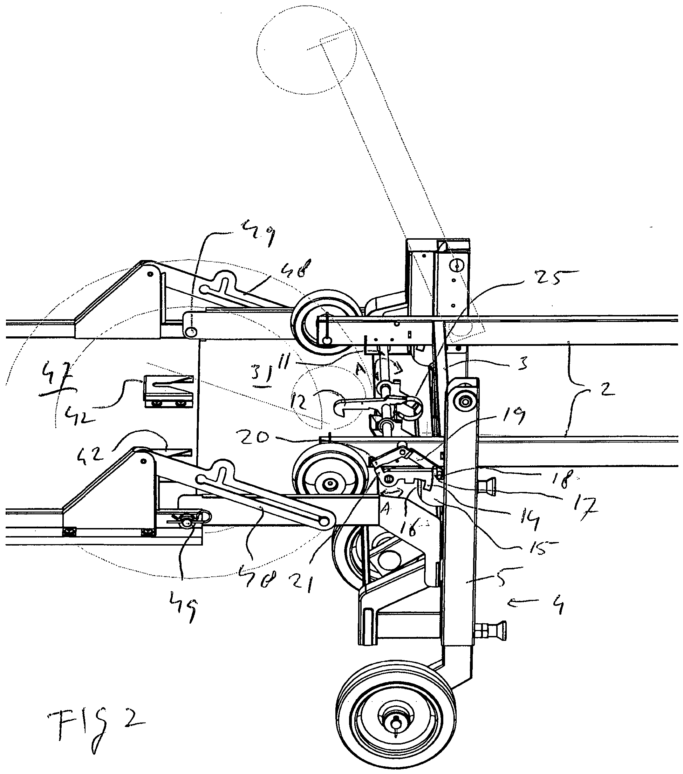

Fig. 2 is a further cut-away perspective view of a further preferred embodiment according to the present invention.

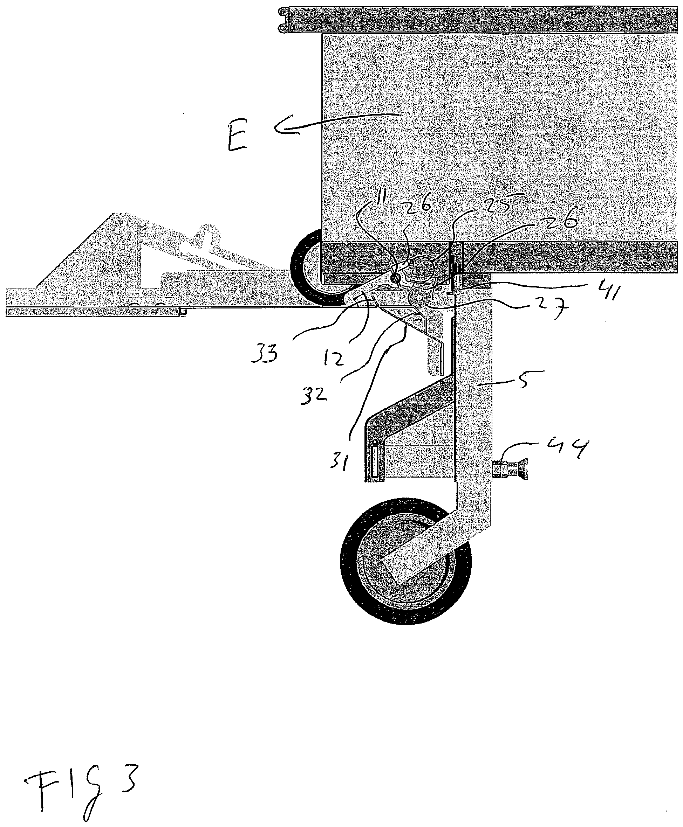

Fig. 3 is a cross-sectional view of a further preferred embodiment.

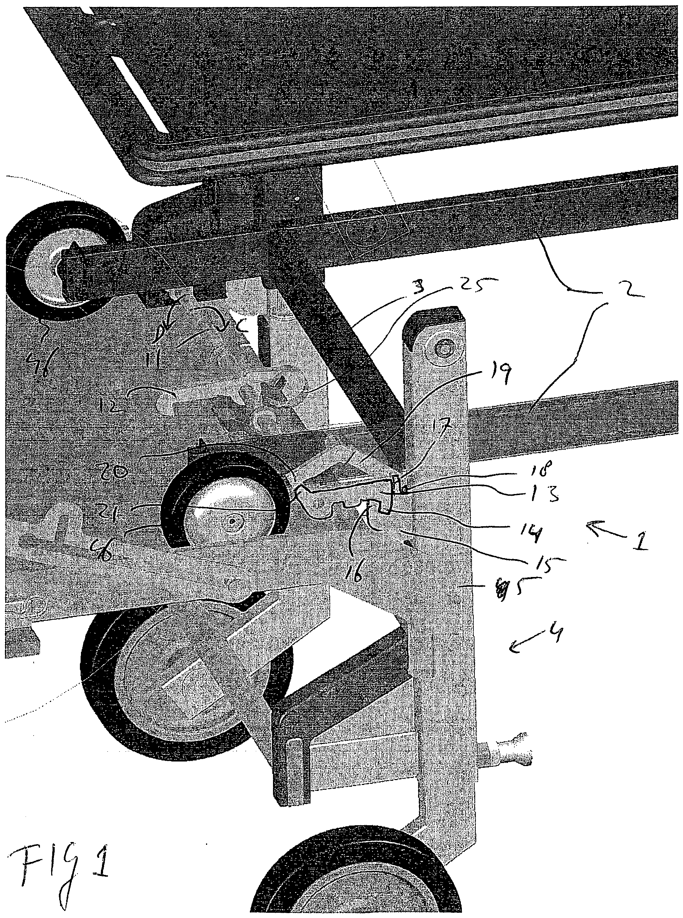

A first preferred embodiment (Fig. 1) according to the present invention relates to a docking mechanism 1 for a tool cart. Docking mechanism 1 is mounted on a frame comprising frame tubes 2, 3. Frame parts 5 of an undercarriage 4 are also arranged pivotally on frame tubes 2, 3. Frame parts 5 are hereby rotatable relative to tubes 2. The movements of frame parts 5 are limited in that the frame parts are provided here with a fixation hook member 15 comprising hook part 16 and hook part 17. The protrusion 14 of hook 13 is hooked into hook part 16. The protruding catch 18 of hook 19 is hooked into hook part 17.

At the other end the hook 13 comprises a blocking protrusion 21 which is blocked by the other end 20 of hook 19. Hook 13 is fixed on the end of shaft 11. Hook 12 is likewise fixed, though approximately in the middle of shaft 11. Shaft 11 is under bias in the direction of arrow C by means of a spring (not shown). Hook 12, and thereby shaft 11, is rotatable under bias of spring 25 in the direction of arrow D when the actuating roller 27 of actuating element 26 is urged upward when the vehicle is pushed in the direction of arrow E.

Hook 12 is hereby pushed downward so that it engages on, or moves to a lower level than, end part 33 of the inclining plate 31. The cart is thus prevented in effective manner from moving back in the reverse direction relative to arrow E during the docking operations.

When shaft 11 is rotated in the direction of arrow D, hook 13, or at least outer end 14 thereof, is likewise moved upward and protrusion 21 moved downward. Outer end 20, which will move downward under bias, hereby moves along protrusion 21 so that this latter is thereby blocked. Protrusion 14 simultaneously moves upward and hook part 16 is released. Catch 18 likewise moves upward and releases protrusion 70. The movements of this paragraph take place once hook 12 has been engaged at the end of plate 33. During release of frame part 5 the cart hereby cannot move in the direction opposite to arrow E and thereby fall off the vehicle. As soon as frame part 5 is released, undercarriage 4 can be folded up and the cart can be moved further in the direction of arrow E. Situated at the other end of the cart (not shown) is a similar undercarriage with the same blocking mechanism as on this shown front side. Said operations are repeated for this second part.

One side of the device is shown in these figures. Similar components are mounted mirror-wise on the other side, thereby creating a symmetry, and both sides will function in simultaneous manner. The inclining plate 31 also functions as guide member for wheels 46. A height difference between the cart and the delivery van can hereby be compensated.

The method is described above for docking of the cart to the delivery van. During the opposite operation, undocking of the cart relative to the delivery van, the operation is performed in reverse. Frame part 5 is folded downward. During this movement frame part 5 first comes into contact with catch 18, whereby this catch 18 is urged downward to a position behind protrusion 17.

The cart is still secured here relative to the delivery van since hook 12 is still directed downward. Because catch 18 is urged downward, outer end 20 of hook 19 is urged upward. Protrusion 21 of hook 13 will hereby be released and, due to the bias on shaft 11, the whole hook 13 will rotate so that protrusion 14 once again hooks behind protrusion 16. As soon as catch 18 hooks behind protrusion 17 of hook member 15, frame part 5 can already no longer move freely and the undercarriage of the cart is thus secured. Since the movements of hook 13 and shaft 11, and thereby hook 12, are only possible once the outer end 20 has released protrusion 21, undercarriage 4 is fixed before the blocking by hook 12 is removed. During folding back of the undercarriage, and so when the wheels are almost situated under inclining plate 31, the cart can hereby not fall off the delivery van. The device is therefore very safe.

Arranged on bottom plate 47 are a number of hook-in elements 42 into which the substantially T-shaped elements 41 slide during movement of the cart in the direction of arrow E. The cart is hereby secured relative to the delivery van. Knob 44 operates a height adjustment for the undercarriage. The cart can hereby be modified in simple manner to different vehicles.

Plate 31 is pivotable relative to catches 49 and blockable by means of a guide element 48 on each side.

The invention is described here with reference to a cart and a delivery van. It is however possible to envisage a large number of vehicles and transport means which can be mutually coupled using a docking device according to the present invention. It is possible here to envisage transport means and machines which have to be transported. The invention can likewise be applied for the purpose of placing vehicles in for instance boats or aircraft.

The present invention has been described in the foregoing on the basis of several preferred embodiments. Different aspects of different embodiments are deemed described in combination with each other. All combinations which can be made by a skilled person in the field on the basis of this document are deemed included. These preferred embodiments are not limitative for the scope of protection of this document. The rights sought are defined in the appended claims.

## Claims

1. Docking mechanism for docking a dockable transport means, comprising at least a transport undercarriage (4) with transport means such as wheels, in safeguarded manner to a receiving location, such as a receiving location which can be arranged on a vehicle, such as a road, marine or airborne vehicle, wherein
the transport undercarriage (4) can only be transferred from a position of use to a docking position when the transport means is situated in a blocking mode relative to the receiving location, and wherein the blocking mode can be discontinued only when the transport undercarriage (4) is situated in the position of use, **characterised in that**, the docking mechanism comprises:
- a support member for supporting the transport means during the docking,
- a blocking actuator (26) for actuating a blocking member (12) between a blocking mode and a release mode for the purpose of blocking the transport means against leaving the receiving location during docking, while the transport undercarriage (4) is in a free docking position,
- a coupling assembly for switching the transport undercarriage (4) between a position of use and the docking position, wherein
- the coupling assembly is adapted such that switching of the transport undercarriage (4) from the position of use to the docking position is possible when the blocking member is situated in the blocking mode, and that actuation of the blocking member (12) from the blocking mode to the release mode is possible when the transport undercarriage (4) is situated in the position of use, wherein the coupling assembly comprises:
- a primary coupling member (13) for hooking into a primary transport undercarriage hook,
- a primary transport undercarriage hook (16) for receiving the primary coupling member, wherein the primary coupling member (13) and the primary transport undercarriage hook (16) can only be uncoupled when the blocking member is in the blocking mode.

2. Docking mechanism as claimed in claim 1, wherein the coupling assembly comprises:
- a secondary coupling member (18) for hooking into a secondary transport undercarriage hook (17),
- a secondary transport undercarriage hook for receiving the secondary coupling member, wherein the secondary coupling member and the secondary transport undercarriage hook can only be uncoupled during the coupling operation of the primary coupling member.

3. Docking mechanism as claimed in one or more of the foregoing claims, wherein the support member comprises displacing means such as wheels (46) or slide pads, preferably wherein the blocking actuator is coupled by means of a spring member to the blocking member, preferably comprising a rotatable shaft (11) arranged transversely under the transport means, wherein primary coupling members are arranged on the outer ends thereof, preferably wherein the blocking member (12) and the primary coupling member (13) are fixed and arranged round a rotatable shaft, preferably wherein the secondary coupling member is arranged for rotation under bias relative to the primary coupling member, preferably also wherein the primary coupling member is provided with a blocking element for co-action with the secondary coupling member.

4. Docking mechanism as claimed in one or more of the foregoing claims, wherein a frame (5) of the transport undercarriage (4) is arranged pivotally relative to the secondary coupling member in a manner such that the secondary coupling member is urged into the secondary transport undercarriage hook when the frame of the transport undercarriage is pivoted from the docking position to the position of use.

5. Docking mechanism as claimed in one or more of the foregoing claims, comprising biasing means for orienting the blocking member under bias in the direction of the free position, or for holding the rotatable shaft under bias in a manner such that the blocking member is held in the free position and the primary coupling members in the coupled position.

6. Receiving assembly which can be arranged at a receiving location of a vehicle, such as a road, marine or airborne vehicle for co-action with a docking mechanism as claimed in one or more of the foregoing claims, wherein the receiving assembly comprises an engaging member for co-action with the blocking member.

7. Receiving assembly as claimed in the foregoing claim, comprising a receiving member variable in height, such as an inclining member, such as a receiving plate, for receiving a support member thereon.

8. Receiving assembly as claimed in one or more of the two foregoing claims, comprising an actuating member preferably arranged on the receiving plate for actuating the blocking actuator.

9. Receiving assembly as claimed in one or more of the three foregoing claims, comprising a number of fixation members for fixing the transport means relative to the vehicle.

10. Receiving assembly as claimed in one or more of the four foregoing claims, wherein the receiving member is pivotable and fixable.

11. Docking mechanism as claimed in one or more of the foregoing claims 1-5, comprising a receiving assembly according to one or more of the claims 8-12 which can be arranged at the receiving location.

12. Transport means comprising a docking mechanism as claimed in one or more of the foregoing claims.

13. Method for docking a transport means according to one or more of the preceding claims relative to a vehicle according to one or more of the preceding claims, comprising steps for:
- arranging the vehicle and the transport means relative to each other so that they are situated in the relative arrangement suitable for docking,
- moving the vehicle and the transport means relative to each other so that the docking mechanism is introduced into the receiving location.

## Patentansprüche

1. Andockvorrichtung zum Andocken eines andockbaren Transportmittels, umfassend mindestens ein Transportfahrwerk (4) mit Transportmitteln wie Rädern, gesichert an einen Empfangsort, wie einen an einem Fahrzeug anordbaren Empfangsort, wie ein Straßen-, See- oder Luftfahrzeug, wobei
- das Transportfahrwerk (4) nur dann von einer Gebrauchsstellung in eine Andockstellung überführt werden kann, wenn sich das Transportmittel in einem Sperrzustand gegenüber dem Empfangsort befindet und der Sperrzustand nur dann aufgehoben werden kann, wenn das Transportfahrwerk (4) in Betrieb sich befindet in der Gebrauchslage, **dadurch gekennzeichnet, dass** der Andockmechanismus umfasst:
- ein Stützelement zum Stützen des Transportmittels während des Andockens,
- einen Blockieraktuator (26) zum Betätigen eines Blockierglieds (12) zwischen einem Blockiermodus und einem Freigabemodus zum Blockieren des Transportmittels gegen Verlassen des Aufnahmeortes während des Andockens, während sich das Transportfahrwerk (4) zwischen einem freien Zustand und einen Andockposition befindet,
- eine Kupplungsanordnung zum Umschalten des Transportfahrwerks (4) zwischen einer Gebrauchsstellung und der Andockstellung, wobei
- die Kupplungsanordnung derart ausgebildet ist, dass ein Umschalten des Transportfahrwerks (4) von der Gebrauchsstellung in die Andockstellung möglich ist, wenn sich das Sperrglied im Sperrmodus befindet, und dass ein Betätigen des Sperrglieds (12) von der Der Sperrmodus in den Freigabemodus möglich ist, wenn sich das Transportfahrwerk (4) in der Gebrauchsstellung befindet, wobei die Kupplungsanordnung umfasst:
- ein primäres Kupplungselement (13) zum Einhängen in einen primären Transportwagenhaken,
- einen Primärtransportwagenhaken (16) zur Aufnahme des Primärkupplungsglieds, wobei das Primärkupplungsglied (13) und der Primärtransportwagenhaken (16) nur dann entkoppelt werden können, wenn sich das Sperrglied im Sperrmodus befindet.

2. Andockmechanismus nach Anspruch 1, wobei die Kupplungsanordnung umfasst:
- ein sekundäres Kupplungsglied (18) zum Einhaken in einen sekundären Transportwagenhaken (17),
- einen Sekundärtransportwagenhaken zur Aufnahme des Sekundärkupplungsgliedes, wobei das Sekundärkupplungsglied und der Sekundärtransportwagenhaken nur während des Kupplungsvorganges vom Primärkupplungsglied abgekuppelt werden können.

3. Andockmechanismus nach einem oder mehreren der vorhergehenden Ansprüche, wobei das Stützelement Verschiebemittel wie Räder (46) oder Gleitstücke umfasst, wobei der Blockieraktuator vorzugsweise mittels eines Federelements mit dem Blockierelement gekoppelt ist. vorzugsweise umfassend eine drehbare Welle (11), die quer unter dem Transportmittel angeordnet ist, wobei primäre Kopplungsglieder an dessen äußeren Enden angeordnet sind, wobei vorzugsweise das Blockierglied (12) und das primäre Kopplungsglied (13) um ein drehbares Element befestigt und angeordnet sind Welle, wobei vorzugsweise das Sekundärkupplungselement zur Drehung unter Vorspannung relativ zu dem Primärkupplungselement angeordnet ist, wobei vorzugsweise auch das Primärkupplungselement mit einem Sperrelement zum Zusammenwirken mit dem Sekundärkupplungselement versehen ist.

4. Andockmechanismus nach einem oder mehreren der vorhergehenden Ansprüche, **dadurch gekennzeichnet, dass** ein Rahmen (5) des Transportfahrwerks (4) relativ zum Sekundärkupplungsglied derart schwenkbar angeordnet ist, dass das Sekundärkupplungsglied in das eingedrückt wird sekundärer Transportwagenhaken, wenn der Rahmen des Transportwagens aus der Andockposition in die Gebrauchsstellung geschwenkt wird.

5. Andockmechanismus nach einem oder mehreren der vorhergehenden Ansprüche, umfassend Vorspannmittel zum Ausrichten des Sperrelements unter Vorspannung in Richtung der freien Position oder zum Halten der drehbaren Welle unter Vorspannung auf eine Weise, dass das Sperrelement ist in der freien Position und die primären Kupplungsglieder in der gekoppelten Position gehalten.

6. Empfangsanordnung, die an einem Empfangsort eines Fahrzeugs angeordnet sein kann, wie beispielsweise einem Straßen-, See- oder Luftfahrzeug, um mit einem Andockmechanismus nach einem oder mehreren der vorhergehenden Ansprüche zusammenzuwirken, wobei die Empfangsanordnung eine Eingriffselement zum Zusammenwirken mit dem Blockierelement.

7. Aufnahmeanordnung nach dem vorhergehenden Anspruch, umfassend ein in der Höhe veränderliches Aufnahmeelement, wie beispielsweise ein Neigungselement, wie beispielsweise eine Aufnahmeplatte, zum Aufnehmen eines Halteelements darauf.

8. Aufnahmeanordnung nach einem oder mehreren der beiden vorhergehenden Ansprüche, umfassend ein vorzugsweise an der Aufnahmeplatte angeordnetes Betätigungsorgan zur Betätigung des Blockieraktuators.

9. Aufnahmeanordnung nach einem oder mehreren der drei vorhergehenden Ansprüche, umfassend eine Anzahl von Befestigungselementen zum Befestigen der Transportmittel relativ zum Fahrzeug.

10. Aufnahmeanordnung nach einem oder mehreren der vier vorhergehenden Ansprüche, wobei das Aufnahmeelement schwenkbar und feststellbar ist.

11. Andockmechanismus nach einem oder mehreren der vorhergehenden Ansprüche 1 bis 5, umfassend eine Aufnahmeanordnung nach einem oder mehreren der Ansprüche 8 bis 12, die an der Aufnahmestelle angeordnet werden kann.

12. Transportmittel mit einem Andockmechanismus nach einem oder mehreren der vorhergehenden Ansprüche.

13. Verfahren zum Andocken eines Transportmittels nach einem oder mehreren der vorhergehenden Ansprüche an ein Fahrzeug nach einem oder mehreren der vorhergehenden Ansprüche, umfassend Schritte zum:
- Anordnen des Fahrzeugs und der Transportmittel relativ zueinander, so dass sie sich in der relativen Anordnung befinden, die zum Andocken geeignet ist,
- Bewegen des Fahrzeugs und des Transportmittels relativ zueinander, so dass der Andockmechanismus in den Empfangsort eingeführt wird.

## Revendications

1. Mécanisme d'accostage pour amarrer un moyen de transport pouvant être amarré, comprenant au moins un atterrisseur de transport (4) avec des moyens de transport tels que des roues, de manière sécurisée à un emplacement de réception, tel qu'un emplacement de réception pouvant être disposé sur un véhicule, tel que un véhicule routier, marin ou aérien, dans lequel
- l'atterrisseur de transport (4) ne peut être transféré d'une position d'utilisation à une position d'accostage que lorsque le moyen de transport est situé dans un mode de blocage par rapport à l'emplacement de réception, et dans lequel le mode de blocage ne peut être interrompu que lorsque l'atterrisseur de transport (4) est situé dans la position d'utilisation, **caractérisé en ce que** le mécanisme d'accostage comprend:
- un élément de support pour supporter les moyens de transport pendant l'accostage,
- un actionneur de blocage (26) pour actionner un organe de blocage (12) entre un mode de blocage et un mode de déverrouillage afin d'empêcher le moyen de transport de quitter l'emplacement de réception pendant l'accostage, pendant que l'atterrisseur de transport (4) est dans une position libre position d'amarrage,
- un ensemble d'accouplement pour commuter l'atterrisseur de transport (4) entre une position d'utilisation et la position d'accostage, dans lequel
- l'ensemble de couplage est adapté pour permettre le passage de l'atterrisseur de transport (4) de la position d'utilisation à la position d'accostage lorsque l'organe de blocage est situé en mode de blocage, et que l'actionnement de l'organe de blocage (12) depuis le mode de blocage du mode de déverrouillage est possible lorsque l'atterrisseur de transport (4) est situé dans la position d'utilisation, dans lequel l'ensemble d'accouplement comprend:
- un élément d'accouplement principal (13) destiné à être accroché à un crochet de l'atterrisseur de transport principal,
- un crochet de l'atterrisseur de transport principal (16) destiné à recevoir l'élément d'accouplement principal, dans lequel l'élément de couplage principal (13) et le crochet de l'atterrisseur de transport principal (16) ne peuvent être découplés que lorsque l'élément de blocage est en mode de blocage.

2. Mécanisme d'accostage selon la revendication 1, dans lequel l'ensemble de couplage comprend:
- un élément d'accouplement secondaire (18) destiné à s'accrocher à un crochet de l'atterrisseur de transport secondaire (17),
- un crochet de l'atterrisseur de transport secondaire pour recevoir l'élément d'accouplement secondaire, l'élément de couplage secondaire et le crochet de l'atterrisseur de transport secondaire ne pouvant être découplés que pendant l'opération de couplage de l'élément d'accouplement primaire.

3. Mécanisme d'accostage selon une ou plusieurs des revendications précédentes, dans lequel l'élément de support comprend des moyens de déplacement tels que des roues (46) ou des patins glissants, de préférence dans lesquels l'actionneur de blocage est couplé au moyen d'un élément à ressort à l'élément de blocage, comprenant de préférence un arbre rotatif (11) disposé transversalement sous le moyen de transport, dans lequel des éléments d'accouplement primaires sont disposés sur ses extrémités extérieures, de préférence dans lequel l'élément de blocage (12) et l'élément d'accouplement principal (13) sont fixés et disposés autour d'un axe rotatif un arbre, de préférence dans lequel l'élément d'accouplement secondaire est disposé pour tourner sous contrainte par rapport à l'élément d'accouplement principal, de préférence également dans lequel l'élément d'accouplement primaire est pourvu d'un élément de blocage pour une action en coopération avec l'élément d'accouplement secondaire.

4. Mécanisme d'accostage selon une ou plusieurs des revendications précédentes, dans lequel un châssis (5) de l'atterrisseur de transport (4) est disposé de manière pivotante par rapport à l'élément d'accouplement secondaire de manière à ce que l'élément d'accouplement secondaire soit poussé dans le crochet secondaire de l'atterrisseur de transport lorsque le châssis de l'atterrisseur de transport est pivoté de la position d'accostage à la position d'utilisation.

5. Mécanisme d'accostage selon une ou plusieurs des revendications précédentes, comprenant des moyens de sollicitation pour orienter l'élément de blocage sous sollicitation dans la direction de la position libre, ou pour maintenir l'arbre rotatif sous sollicitation de manière à ce que l'élément de blocage maintenus dans la position libre et les éléments d'accouplement primaires dans la position accouplée.

6. Ensemble de réception qui peut être disposé à l'emplacement de réception d'un véhicule, tel qu'un véhicule routier, maritime ou aérien, pour une coopération avec un mécanisme d'accostage selon l'une ou plusieurs des revendications précédentes, dans lequel l'ensemble de réception comprend engager membre pour co-action avec l'élément bloquant.

7. Ensemble récepteur selon la revendication précédente, comprenant un élément récepteur de hauteur variable, tel qu'un élément inclinable, tel qu'une plaque de réception, pour recevoir un élément de support sur celui-ci.

8. Ensemble récepteur selon l'une ou plusieurs des deux revendications précédentes, comprenant un organe d'actionnement disposé de préférence sur la plaque réceptrice pour actionner l'actionneur de blocage.

9. Ensemble récepteur selon l'une ou plusieurs des trois revendications précédentes, comprenant un certain nombre d'éléments de fixation pour fixer le moyen de transport par rapport au véhicule.

10. Ensemble récepteur selon l'une ou plusieurs des quatre revendications précédentes, dans lequel l'élément récepteur peut pivoter et peut se fixer.

11. Mécanisme d'accostage selon l'une ou plusieurs des revendications précédentes 1 à 5, comprenant un ensemble récepteur suivant l'une ou plusieurs des revendications 8 à 12, qui peut être disposé au niveau de l'emplacement de réception.

12. Moyen de transport comprenant un mécanisme d'accostage selon l'une ou plusieurs des revendications précédentes.

13. Procédé d'accostage d'un moyen de transport selon l'une ou plusieurs des revendications précédentes, relatif à un véhicule selon l'une ou plusieurs des revendications précédentes, comprenant les étapes consistant à:
- disposer le véhicule et les moyens de transport l'un par rapport à l'autre de manière à ce qu'ils soient situés dans la disposition relative appropriée pour l'accostage,
- déplacer le véhicule et les moyens de transport l'un par rapport à l'autre de sorte que le mécanisme d'accostage soit introduit dans l'emplacement de réception.
